# EUROPEAN PATENT SPECIFICATION

(11) **EP 2 397 721 B1**
(45) Date of publication and mention of the grant of the patent: **04.09.2013**
(21) Application number: 10706469.3
(22) Date of filing: 29.01.2010
(51) Int. Cl.: F16H 1/46, F16H 1/48, F03D 11/02

(54) **SUN-AND-PLANET SPEED-UP GEAR**
BESCHLEUNIGUNGSPLANETENGETRIEBE
ENGRENAGE PLANETAIRE ACCELERATEUR

(30) Priority: 16.02.2009 JP 2009032616
(43) Date of publication of application: 21.12.2011
(73) Proprietor: Mitsubishi Heavy Industries, Ltd., Tokyo 108-8215 (JP)
(72) Inventor: SHODA, Katsuhiko, Nagasaki-shi Nagasaki 851-0392 (JP); SAKAI, Kenji, Ritto-shi Shiga 520-3080 (JP); SUZUKI, Kazutaka, Ritto-shi Shiga 520-3080 (JP)
(74) Representative: Intès, Didier Gérard André
(86) International application number: PCT/JP2010/051220
(87) International publication number: WO 2010/092880

(56) References cited:
- EP-A2- 1 117 012
- WO-A2-2009/052826
- CN-A- 101 319 702
- JP-A- 4 064 718
- JP-A- 8 240 247
- JP-A- 10 246 173
- JP-U- 2 071 120
- JP-U- 48 011 240

## Description

### {Technical Field}

The present invention relates to sun-and-planet speed-up gears suitably used for wind turbines etc.

### {Background Art}

An example known sun-and-planet gearing (hereinafter, referred to as "sun-and-planet speed-up gear") used for a wind turbine is disclosed in Patent Literature 1.
{Citation List}
{Patent Literature}

### {PTL 1}

Japanese Unexamined Patent Application, Publication No. 2005-233277, Document JP 10-246173 A1 represents the closest prior art and shows the preamble of claims 1 and 3.

### {Summary of Invention}

### {Technical Problem}

However, in such a conventional sun-and-planet speed-up gear, a flange formed at the tip of the shaft of a low-speed-stage (first-stage) sun gear is directly secured (directly attached) to a high-speed-stage carrier via a plurality of bolts and nuts. Therefore, the centering properties of the low-speed-stage sun gear is poor (the distances between the center of the low-speed-stage sun gear and the centers of low-speed-stage planet gears revolving about the low-speed-stage sun gear are different for each of the low-speed-stage planet gears), the degree of contact with the low-speed-stage sun gear and the load received from the low-speed-stage sun gear are different for each of the low-speed-stage planet gears, and thus tooth surfaces of the low-speed-stage sun gear and the low-speed-stage planet gears may be damaged and a bearing that rotatably supports an input shaft may be damaged.

The present invention has been made in view of the above-described circumstances, and an object thereof is to provide a sun-and-planet speed-up gear capable of automatically centering the low-speed-stage sun gear and of preventing damage to the gears and the bearing.

### {Solution to Problem}

In order to solve the above-described object, the present invention employs the following solutions.

According to a first aspect, the present invention provides a sun-and-planet speed-up gear including: a low-speed-stage sun-and-planet gearing; and a high-speed-stage sun-and-planet gearing, an input shaft being connected to a low-speed-stage ring gear, the position of a shaft of a low-speed-stage planet gear being secured, a shaft of a low-speed-stage sun gear being connected to a high-speed-stage carrier, and an output shaft being connected to the high-speed-stage sun gear, in which a flange formed at a tip of the shaft of the low-speed-stage sun gear and a flange formed at a tip of a coupling that is directly attached to the high-speed-stage carrier or that is formed on the high-speed-stage carrier are coupled via a sleeve.

According to the sun-and-planet speed-up gear of the first aspect of the present invention, the flange formed at the tip of the shaft of the low-speed-stage sun gear and the flange formed at the tip of the coupling that is directly attached to the high-speed-stage carrier or that is formed on the high-speed-stage carrier are coupled via the sleeve, so that the low-speed-stage sun gear can move (somewhat: slightly) in parallel in the radial direction.

Therefore, when the low-speed-stage sun gear is assembled, the low-speed-stage sun gear is automatically centered (the low-speed-stage sun gear automatically moves to a position where the distances between the center of the low-speed-stage sun gear and the centers of the low-speed-stage planet gears are equal), and thus damage to tooth surfaces of the low-speed-stage sun gear and the low-speed-stage planet gears and to a bearing that rotatably supports the input shaft can be prevented.

According to a second aspect, the present invention provides a sun-and-planet speed-up gear including: a low-speed-stage sun-and-planet gearing; and a high-speed-stage sun-and-planet gearing, an input shaft being connected to a low-speed-stage ring gear, the position of a shaft of a low-speed-stage planet gear being secured, a shaft of a low-speed-stage sun gear being connected to a high-speed-stage carrier, and an output shaft being connected to the high-speed-stage sun gear, in which coupling is made via a flexible coupling one end of which is attached to a flange formed at a tip of the shaft of the low-speed-stage sun gear and the other end of which is attached to the high-speed-stage carrier.

According to the sun-and-planet speed-up gear of the second aspect of the present invention, the low-speed-stage sun gear and the high-speed-stage carrier are coupled via the flexible coupling one end of which is directly attached to the flange formed at the tip of the shaft of the low-speed-stage sun gear and the other end of which is attached to the high-speed-stage carrier, so that the low-speed-stage sun gear can move (somewhat: slightly) in parallel in the radial direction.

Therefore, when the low-speed-stage sun gear is assembled, the low-speed-stage sun gear is automatically centered (the low-speed-stage sun gear automatically moves to a position where the distances between the center of the low-speed-stage sun gear and the centers of the low-speed-stage planet gears are equal), and thus damage to the tooth surfaces of the low-speed-stage sun gear and the low-speed-stage planet gears and to the bearing that rotatably supports the input shaft can be prevented.

A wind turbine according to a third aspect of the present invention includes a sun-and-planet speed-up gear in which, when the low-speed-stage sun gear is assembled, the low-speed-stage sun gear is automatically centered (the low-speed-stage sun gear automatically moves to a position where the distances between the center of the low-speed-stage sun gear and the centers of the low-speed-stage planet gears are equal), and thus damage to the tooth surfaces of the low-speed-stage sun gear and the low-speed-stage planet gears and to the bearing that rotatably supports the input shaft can be prevented.

According to the wind turbine of the third aspect of the present invention, damage to the tooth surfaces of the low-speed-stage sun gear and the low-speed-stage planet gears and to the bearing that rotatably supports the input shaft can be prevented, thereby improving reliability and durability.

### {Advantageous Effects of Invention}

According to the present invention, an advantage is afforded in that the low-speed-stage sun gear is automatically centered, and damage to the gears and the bearing can be prevented.

### {Brief Description of Drawings}

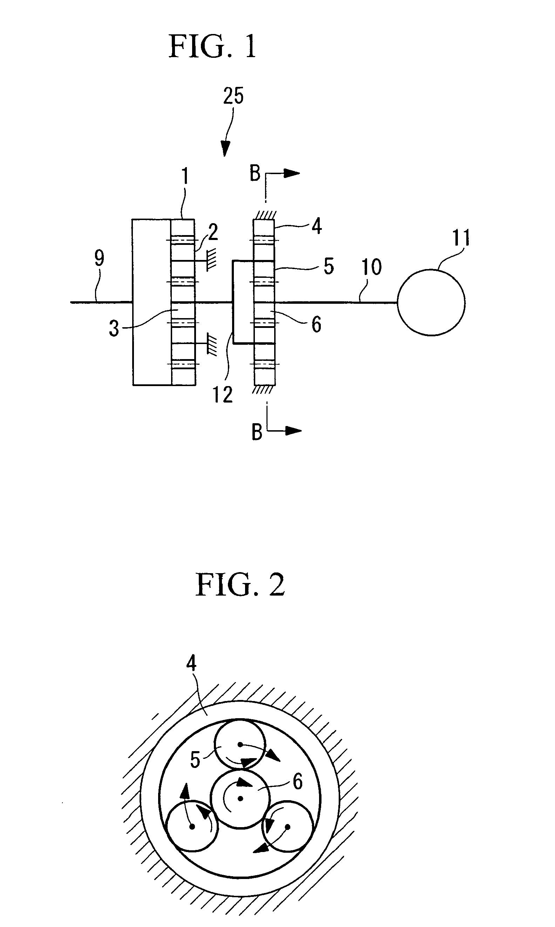

{Fig. 1}
   FIG. 1 is a longitudinal sectional view of a sun-and-planet speed-up gear according to a first embodiment of the present invention.
{Fig. 2}
   FIG. 2 is a sectional view along the arrows B-B shown in FIG. 1.
{Fig. 3}
   FIG. 3 is an enlarged main-portion view showing an enlarged main portion shown in FIG. 1.
{Fig. 4}
   FIG. 4 is a sectional view of a sun-and-planet speed-up gear according to a second embodiment of the present invention and is an enlarged main-portion view showing an enlarged main portion thereof.
{Fig. 5}
   FIG. 5 is a sectional view of a sun-and-planet speed-up gear according to a third embodiment of the present invention and is an enlarged main-portion view showing an enlarged main portion thereof.

### {Description of Embodiments}

A sun-and-planet speed-up gear according to a first embodiment of the present invention will be described below with reference to FIG. 1 to FIG. 3.

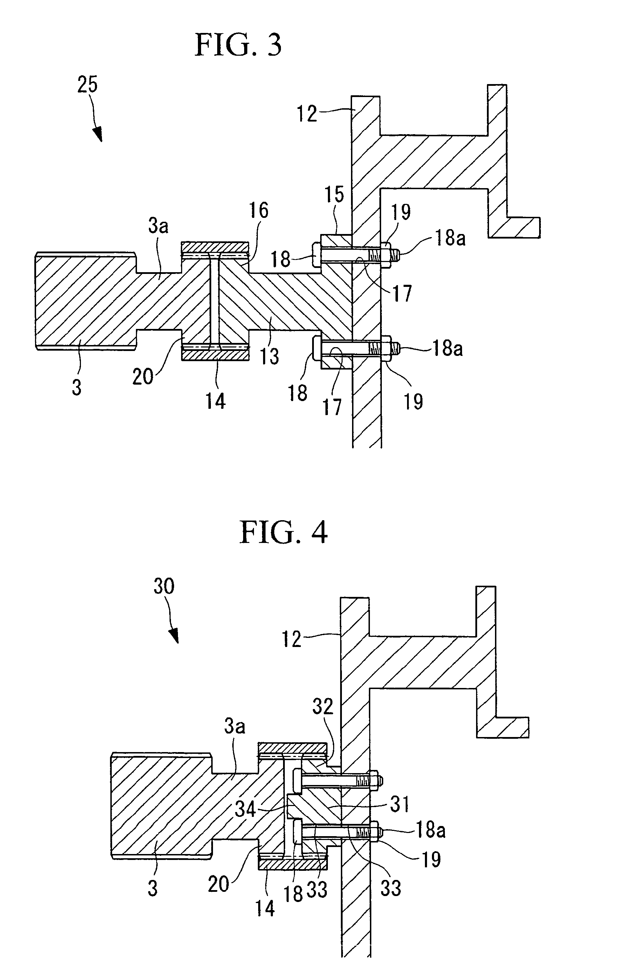

FIG. 1 is a longitudinal sectional view of the sun-and-planet speed-up gear according to this embodiment. FIG. 2 is a sectional view along the arrows B-B shown in FIG. 1. FIG. 3 is an enlarged main-portion view showing an enlarged main portion shown in FIG. 1.

A sun-and-planet speed-up gear 25 according to this embodiment is used for a wind turbine (not shown), for example. In FIG. 1, reference numeral 9 denotes an input shaft, reference numeral 10 denotes an output shaft, and reference numeral 11 denotes a power generator connected to the output shaft 10. A low-speed-stage (first-stage) sun-and-planet gearing (star-type sun-and-planet gearing) is provided close to the input shaft 9, and a high-speed-stage (second-stage) sun-and-planet gearing (planetary-type sun-and-planet gearing) is provided close to the output shaft 10. Reference numeral 1 denotes a low-speed-stage ring gear that is connected to the input shaft 9 to rotate therewith, reference numeral 2 denotes low-speed-stage planet gears that are engaged with the low-speed-stage ring gear 1 and that rotate about their fixed axes, and reference numeral 3 denotes a low-speed-stage sun gear that is engaged with the low-speed-stage planet gears 2 to rotate therewith.

In FIG. 1 and FIG. 2, reference numeral 4 denotes a fixed high-speed-stage ring gear, reference numeral 5 denotes high-speed-stage planet gears that are engaged with the high-speed-stage ring gear 4 to rotate therewith while their high-speed-stage carrier 12 is connected to and revolves about a shaft 3a of the low-speed-stage sun gear 3, and reference numeral 6 denotes a high-speed-stage sun gear that is rotationally driven by the high-speed-stage planet gears 5.

Note that the output shaft 10 is a rotary shaft of the high-speed-stage sun gear 6 and rotates together therewith.

In this sun-and-planet speed-up gear 25, the high-speed-stage ring gear 4 is fixed; and the rotation of the input shaft 9 is sequentially transferred to the low-speed-stage ring gear 1, the low-speed-stage planet gears 2, the low-speed-stage sun gear 3, the high-speed-stage planet gears 5, and the high-speed-stage sun gear 6 to increase in speed; and the rotation whose speed has been increased is output from the output shaft 10.

As shown in FIG. 3, in this embodiment, the shaft 3a of the low-speed-stage sun gear 3 and the high-speed-stage carrier 12 are coupled (connected) via a coupling 13 and a sleeve 14.

The coupling 13 is a cylindrical-shaped member having an I-shape in cross section that has a first flange 15 at one end (end located close to the high-speed-stage carrier 12) and that has a second flange 16 smaller in diameter than the first flange 15 at the other end (end located close to the low-speed-stage sun gear 3). In the first flange 15 and the high-speed-stage carrier 12, a plurality of (for example, four) through-holes 17 that pass therethrough in a plate-thickness direction are formed in the circumferential direction, and reamer bolts 18 pass through the through-holes 17. Then, the coupling 13 is secured (attached) to the high-speed-stage carrier 12 by means of the reamer bolts 18 that pass through the through-holes 17 and nuts 19 that screw together male screw parts 18a formed at the tips (ends located at the opposite side of the bolt heads) of the reamer bolts 18, such that an end face of the first flange 15 is brought into contact with a surface of the high-speed-stage carrier 12.

Note that, in this embodiment, the reamer bolts 18 and the nuts 19 are fastened such that the heads of the reamer bolts 18 protrude from the first flange 15, and the nuts 19 protrude from the high-speed-stage carrier 12.

Further, a flange 20 having the same diameter as the second flange 16 is formed at the tip (end facing the coupling 13) of the shaft 3a extending from the low-speed-stage sun gear 3.

The sleeve 14 is a hollow cylindrical-shaped member having the same inner diameter as the outer diameters of the second flange 16 and the flange 20 and is made from a rigid material or a flexible material. Further, the sleeve 14 is fitted radially outward, on the second flange 16 and the flange 20 such that the inner circumference face thereof is brought into contact with the outer circumference faces of the second flange 16 and the flange 20.

According to the sun-and-planet speed-up gear 25 of this embodiment, the flange 20, which is formed at the tip of the shaft 3a of the low-speed-stage sun gear 3, and the second flange 16, which is formed at the other end of the coupling 13 directly attached to the high-speed-stage carrier 12 via the reamer bolts 18 and the nuts 19, are coupled via the sleeve 14, so that the low-speed-stage sun gear 3 can move (somewhat: slightly) in parallel in the radial direction.

Therefore, when the low-speed-stage sun gear 3 is assembled, the low-speed-stage sun gear 3 is automatically centered (the low-speed-stage sun gear 3 automatically moves to a position where the distances between the center of the low-speed-stage sun gear 3 and the centers of the low-speed-stage planet gears 2 are equal), and thus damage to tooth surfaces of the low-speed-stage sun gear 3 and the low-speed-stage planet gears 2 and to a bearing (not shown) that rotatably supports the input shaft 9 can be prevented.

A sun-and-planet speed-up gear according to a second embodiment of the present invention will be described with reference to FIG. 4. FIG. 4 is a sectional view of the sun-and-planet speed-up gear according to this embodiment and is an enlarged main-portion view showing an enlarged main portion thereof.

As shown in FIG. 4, a sun-and-planet speed-up gear 30 of this embodiment differs from that described above in the first embodiment in that a coupling 31 is provided instead of the coupling 13. Since the other components are the same as those described above in the first embodiment, a description of the components will be omitted here.

The coupling 31 is a cylindrical-shaped member having a T-shape in cross section that has a flange 32 having the same diameter as the flange 20 at one end (end located close to the low-speed-stage sun gear 3) and is shorter in length in the axial direction (longitudinal direction) than the coupling 13, described in the first embodiment (approximately one third of the coupling 13). Also, in the flange 32 and the high-speed-stage carrier 12, a plurality of (for example, four) through-holes 33 that pass therethrough in the plate-thickness direction are formed in the circumferential direction, and the reamer bolts 18 pass through the through-holes 33. Then, the coupling 31 is secured (attached) to the high-speed-stage carrier 12 by means of the reamer bolts 18 that pass through the through-holes 33 and the nuts 19, which screw together the male screw parts 18a formed at the tips (ends located at the opposite side of the bolt heads) of the reamer bolts 18, such that the other end face of the coupling 31 (end face facing a surface of the high-speed-stage carrier 12) is brought into contact with the surface of the high-speed-stage carrier 12.

On the other hand, a protrusion part 34 that protrudes toward an end face of the shaft 3a and that has a length (height) in the axial direction (longitudinal direction) longer (higher) than the height (thickness) of the bolt heads of the reamer bolts 18 is formed at the center of one end face of the coupling 31.

This can prevent damage to the bolt heads caused when the end faces (top faces) of the bolt heads are brought into contact with the end face of the shaft 3a.

Note that, in this embodiment, the reamer bolts 18 and the nuts 19 are fastened such that the heads of the reamer bolts 18 protrude from the flange 32, and the nuts 19 protrude from the high-speed-stage carrier 12.

Further, the sleeve 14 is fitted radially outward, on the flange 20 and the flange 32 such that the inner circumference face thereof is brought into contact with the outer circumference faces of the flange 20 and the flange 32.

According to the sun-and-planet speed-up gear 30 of this embodiment, the flange 20, which is formed at the tip of the shaft 3a of the low-speed-stage sun gear 3, and the flange 32, formed at one end of the coupling 31 directly attached to the high-speed-stage carrier 12 via the reamer bolts 18 and the nuts 19, are coupled via the sleeve 14, so that the low-speed-stage sun gear 3 can move (somewhat: slightly) in parallel in the radial direction.

Therefore, when the low-speed-stage sun gear 3 is assembled, the low-speed-stage sun gear 3 is automatically centered (the low-speed-stage sun gear 3 automatically moves to a position where the distances between the center of the low-speed-stage sun gear 3 and the centers of the low-speed-stage planet gears 2 are equal), and thus damage to tooth surfaces of the low-speed-stage sun gear 3 and the low-speed-stage planet gears 2 and to a bearing (not shown) that rotatably supports the input shaft 9 can be prevented.

Furthermore, according to the sun-and-planet speed-up gear 30 of this embodiment, the coupling 31, which is shorter in length in the axial direction than that of the first embodiment, is used, thereby allowing a reduction in size in the axial direction, making the gear more compact.

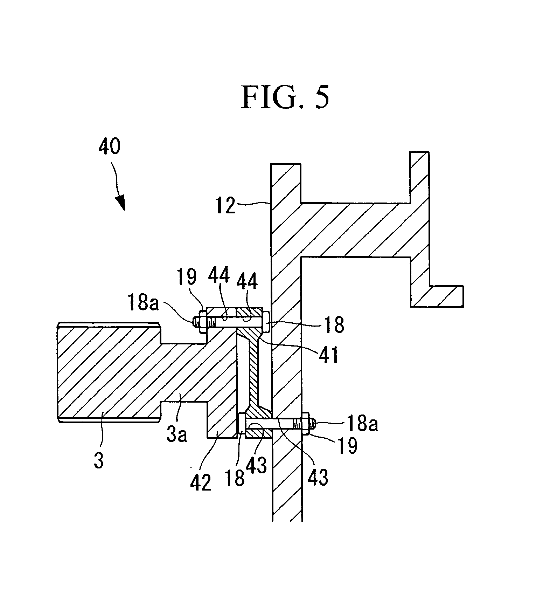

A sun-and-planet speed-up gear according to a third embodiment of the present invention will be described with reference to FIG. 5. FIG. 5 is a sectional view of the sun-and-planet speed-up gear according to this embodiment and is an enlarged main-portion view showing an enlarged main portion thereof.

As shown in FIG. 5, a sun-and-planet speed-up gear 40 of this embodiment differs from that described above in the first embodiment in that a coupling 41 is provided instead of the coupling 13 and the sleeve 14. Since the other components are the same as those described above in the first embodiment, a description of the components will be omitted here.

The coupling 41 is a circular-disc-shaped member having approximately the same diameter as a flange 42 that is formed at the tip (end facing the coupling 41) of the shaft 3a, extending from the low-speed-stage sun gear 3, is formed from a flexible material, and is shorter in length in the axial direction (longitudinal direction) than the coupling 13, described in the first embodiment (approximately one third of the coupling 13). Also, in the coupling 41 and the high-speed-stage carrier 12, a plurality of (for example, two) through-holes 43 that pass therethrough in the plate-thickness direction are formed in the circumferential direction, and the reamer bolts 18 pass through the through-holes 43. Then, the coupling 41 is secured (attached) to the high-speed-stage carrier 12 by means of the reamer bolts 18 that pass through the through-holes 43 and the nuts 19, which screw together the male screw parts 18a formed at the tips (ends located at the opposite side of the bolt heads) of the reamer bolts 18, such that part of one end face of the coupling 41 (end face facing the surface of the high-speed-stage carrier 12) is brought into contact with the surface of the high-speed-stage carrier 12. Further, in the coupling 41 and the flange 42, a plurality of (for example, two) through-holes 44 that pass therethrough in the plate-thickness direction are formed in the circumferential direction, and the reamer bolts 18 pass through the through-holes 44. Then, the coupling 41 is secured (attached) to the flange 42 by means of the reamer bolts 18 that pass through the through-holes 44 and the nuts 19, which screw together the male screw parts 18a formed at the tips (ends located at the opposite side of the bolt heads) of the reamer bolts 18, such that part of the other end face of the coupling 41 (end face facing an end face of the flange 42) is brought into contact with the end face of the flange 42.

Note that, in this embodiment, the reamer bolts 18 and the nuts 19 that couple the coupling 41 and the high-speed-stage carrier 12 are fastened such that the heads of the reamer bolts 18 protrude from the coupling 41, and the nuts 19 protrude from the high-speed-stage carrier 12. On the other hand, the reamer bolts 18 and the nuts 19 that couple the coupling 41 and the flange 42 are fastened such that the heads of the reamer bolts 18 protrude from the coupling 41, and the nuts 19 protrude from the flange 42.

According to the sun-and-planet speed-up gear 40 of this embodiment, the low-speed-stage sun gear 3 and the high-speed-stage carrier 12 are coupled via the flexible coupling 41 one end of which is directly attached to the flange 42, formed at the tip of the shaft 3a of the low-speed-stage sun gear 3, via the reamer bolts 18 and the nuts 19, and the other end of which is directly attached to the high-speed-stage carrier 12 via the reamer bolts 18 and the nuts 19, so that the low-speed-stage sun gear 3 can move (somewhat: slightly) in parallel in the radial direction.

Therefore, when the low-speed-stage sun gear 3 is assembled, the low-speed-stage sun gear 3 is automatically centered (the low-speed-stage sun gear 3 automatically moves to a position where the distances between the center of the low-speed-stage sun gear 3 and the centers of the low-speed-stage planet gears 2 are equal), and thus damage to tooth surfaces of the low-speed-stage sun gear 3 and the low-speed-stage planet gears 2 and to a bearing (not shown) that rotatably supports the input shaft 9 can be prevented.

Furthermore, according to the sun-and-planet speed-up gear 40 of this embodiment, the coupling 41, which is shorter in length in the axial direction than that of the first embodiment, is used, thereby allowing a reduction in size in the axial direction, making the gear more compact.

Note that the present invention is not limited to the above-described embodiments; and various changes and modifications are allowed without departing from the scope of the present invention.

For example, in the above-described embodiments, the reamer bolts 18 and the nuts 19 are used as specific examples of fastening means; however, instead of the reamer bolts 18 and the nuts 19, pins can be used to couple a coupling to the high-speed-stage carrier 12 or the low-speed-stage sun gear 3.

In that case, it is just necessary to put the tips of the pins into the high-speed-stage carrier 12 or the low-speed-stage sun gear 3, thereby improving the assembly properties (manufacturing properties).

Further, in the above-described embodiments, descriptions have been given of the specific example cases in which the coupling 13 or 31 is coupled to the high-speed-stage carrier 12 via the reamer bolts 18 and the nuts 19; however, the coupling 13 or 31 and the high-speed-stage carrier 12 may be formed as a unit.

### {Reference Signs List}

- 1: low-speed-stage ring gear
- 2: low-speed-stage planet gears
- 3: low-speed-stage sun gear
- 3a: shaft
- 6: high-speed-stage sun gear
- 9: input shaft
- 10: output shaft
- 12: high-speed-stage carrier
- 13: coupling
- 14: sleeve
- 16: second flange (flange)
- 20: flange
- 25: sun-and-planet speed-up gear
- 30: sun-and-planet speed-up gear
- 31: coupling
- 32: flange
- 40: sun-and-planet speed-up gear
- 41: coupling
- 42: flange

## Claims

1. A sun-and-planet speed-up gear (25, 30) comprising:
a low-speed-stage sun-and-planet gearing; and
a high-speed-stage sun-and-planet gearing,
an input shaft (9) being connected to a low-speed-stage ring gear (1) of the low-speed-stage planet gearing,
the position of a shaft of a low-speed-stage planet gear (2) of the low-speed-stage sun-and-planet gearing being stationary,
a shaft (3a) of a low-speed-stage sun gear (3) of the low-speed-stage sun-and-planet gearing being connected to a high-speed-stage carrier (12) of the high-speed-stage sun-and-planet gearing, and
an output shaft (10) being connected to the high-speed-stage sun gear (6) of the high-speed-stage sun-and-planet gearing, **characterized in that**
a coupling (13,31)is secured to the high-speed-stage carrier (12)by means of a plurality of reamer bolts (18), and where a second flange (16,32) which is provided on the coupling (13,31) is coupled to a third flange (20), which is provided at a tip of the shaft (3a) of the low-speed-stage sun gear (3) and which has the same diameter as the second flange (16,32) via a sleeve (14) which is fitted on the second and third flanges (16,32,20).

2. The sun-and-planet speed-up gear (25) according to claim 1, wherein:
one end of the coupling (13) is provided with a first flange (15) ,
the first flange (15) is secured to the high-speed-stage carrier (12) by means of the plurality of reamer bolts (18),
the second flange (16) is provided at the other end of the coupling (13), and
the second flange (16) is smaller in diameter than the first flange (15).

3. A sun-and-planet speed-up gear (40) comprising:
a low-speed-stage sun-and-planet gearing; and
a high-speed-stage sun-and-planet gearing,
an input shaft (9) being connected to a low-speed-stage ring gear (1) of the low-speed-stage planet gearing,
the position of a shaft of a low-speed-stage planet gear (2) of the low-speed-stage sun-and-planet gearing being stationary,
a shaft (3a) of a low-speed-stage sun gear (3) of the low-speed-stage sun-and-planet gearing being connected to a high-speed-stage carrier (12) of the high-speed-stage sun-and-planet gearing, and
an output shaft (10) being connected to the high-speed-stage sun gear (6) of the high-speed-stage sun-and-planet gearing,
**characterized in that**
a flange (42) which is provided at a tip of the shaft (3a) of the low-speed-stage sun gear (3) is coupled to the high-speed-stage carrier (12) via a coupling (41) which is a flexible circular-disc-shaped member having approximately the same diameter as the flange (42), a part of the coupling (41) is secured to the high speed stage carrier (12) by means of a reamer bolt (18) such that one end face of the coupling (41) is brought into contact with a surface of the high-speed-stage carrier (12), and
another part of the coupling (41) is secured to the flange (42) by means of another reamer bolt (18) such that the other end face of the coupling (41) is brought into contact with an end face of the flange (42).

4. A wind turbine comprising a sun-and-planet speed-up gear according to claim 1 or 3.

## Patentansprüche

1. Hochsetzplanetengetriebe (25, 30), umfassend:
ein Niedrigdrehzahl-Stufen-Planetengetriebe und
ein Hochdrehzahl-Stufen-Planetengetriebe,
eine Antriebswelle (9), die mit einem Hohlrad (1) der Niedrigdrehzahl-Stufe des Niedrigdrehzahl-Stufen-Planetengetriebes verbunden ist,
wobei die Position einer Welle eines Niedrigdrehzahl-Stufen-Planetengetriebes (2) feststehend ist,
eine Welle (3a) eines Niedrigdrehzahl-Stufen-Sonnenrads (3) des Niedrigdrehzahl-Stufen-Planetengetriebes, die mit einem Hochdrehzahl-Stufen-Träger (12) des Hochdrehzahl-Stufen-Planetengetriebes verbunden ist, und
eine Abtriebswelle (10), die mit dem Hochdrehzahl-Stufen-Sonnenrad (6) des Hochdrehzahl-Stufen-Planetengetriebes verbunden ist,
**dadurch gekennzeichnet, dass**
eine Kupplung (13, 31) mit mehreren Passschrauben (18) am Hochdrehzahl-Stufen-Träger (12) gesichert ist, und wobei ein auf der Kupplung (13, 31) vorgesehener zweiter Flansch (16, 32) mit einem dritten Flansch (20), der an einer Spitze der Welle (3a) des ersten Niedrigdrehzahl-Stufen-Sonnenrads (3) vorgesehen ist und den gleichen Durchmesser aufweist wie der zweite Flansch (16, 32), über eine auf den zweiten und dritten Flanschen (16, 32, 20) montierte Hülse (14) verbunden ist.

2. Hochsetzplanetengetriebe (25) nach Anspruch 1, wobei:
ein Ende der Kupplung (13) mit einem ersten Flansch (15) versehen ist,
der erste Flansch (15) mithilfe mehrerer Passschrauben (18) am Hochdrehzahl-Stufen-Träger (12) gesichert ist,
der zweite Flansch (16) am anderen Ende der Kupplung (13) vorgesehen ist,
und
der zweite Flansch (16) einen kleineren Durchmesser aufweist als der erste Flansch (15).

3. Hochsetzplanetengetriebe (40), umfassend:
ein Niedrigdrehzahl-Stufen-Planetengetriebe und
ein Hochdrehzahl-Stufen-Planetengetriebe,
eine Antriebswelle (9), die mit einem Niedrigdrehzahl-Stufen-Hohlrad (1) des Niedrigdrehzahl-Stufen-Planetengetriebes verbunden ist,
wobei die Position einer Welle eines Niedrigdrehzahl-Stufen-Planetengetriebes (2) feststehend ist,
eine Welle (3a) eines Niedrigdrehzahl-Stufen-Sonnenrads (3) des Niedrigdrehzahl-Stufen-Planetengetriebes, die mit einem Hochdrehzahl-Stufen-Träger (12) des Hochdrehzahl-Stufen-Planetengetriebes verbunden ist, und
eine Abtriebswelle (10), die mit dem Hochdrehzahl-Stufen-Sonnenrad (6) des Hochdrehzahl-Stufen-Planetengetriebes verbunden ist,
**dadurch gekennzeichnet, dass**
ein an einer Spitze der Welle (3a) des Niedrigdrehzahl-Stufen-Sonnenrads (3) vorgesehener Flansch (42) über eine Kupplung, bei der es sich um ein flexibles, kreisscheibenförmiges Element mit ungefähr dem gleichen Durchmesser wie der Flansch (42) handelt, mit dem Hochdrehzahl-Stufen-Träger (12) verbunden ist, wobei ein Teil der Kupplung (41) mithilfe einer Passschraube (18) auf solche Weise mit dem Hochdrehzahl-Stufen-Träger (12) verbunden ist, dass eine Endfläche der Kupplung (41) mit einer Fläche des Hochdrehzahl-Stufen-Trägers (12) in Kontakt gebracht wird, und
ein anderer Teil der Kupplung (41) mithilfe einer weiteren Passschraube (18) auf solche Weise am Flansch (42) gesichert ist, dass die andere Endfläche der Kupplung mit einer Endfläche des Flansches (42) in Kontakt gebracht wird.

4. Windturbine, umfassend ein Hochsetzplanetengetriebe nach Anspruch 1 oder 3.

## Revendications

1. Train d'engrenages multiplicateur planétaire (25, 30) comportant :
un engrenage planétaire d'étage à faible vitesse ; et
un engrenage planétaire d'étage à vitesse élevée,
un arbre d'entrée (9) qui est relié à une couronne d'étage à faible vitesse (1) de l'engrenage planétaire d'étage à faible vitesse,
la position d'un arbre d'un planétaire d'étage à faible vitesse (2) de l'engrenage planétaire d'étage à faible vitesse étant fixe,
un arbre (3a) d'un pignon solaire d'étage à faible vitesse (3) de l'engrenage planétaire d'étage à faible vitesse étant relié à un support d'étage à vitesse élevée (12) de l'engrenage planétaire d'étage à vitesse élevée, et
un arbre de sortie (10) étant relié au pignon solaire d'étage à vitesse élevée (6) de l'engrenage planétaire d'étage à vitesse élevée, **caractérisé en ce que**
un élément d'accouplement (13, 31) est fixé sur le support d'étage à vitesse élevée (12) au moyen d'une pluralité de boulons (18), et où une deuxième bride (16, 32) qui est prévue sur l'élément d'accouplement (13, 31) est reliée à une troisième bride (20), qui est prévue à une extrémité de l'arbre (3a) du pignon solaire d'étage à faible vitesse (3) et qui a le même diamètre que la deuxième bride (16, 32) par l'intermédiaire d'un manchon (14) qui est montée sur les deuxième et troisième brides (16, 32, 20).

2. Train d'engrenages multiplicateur planétaire (25) selon la revendication 1, dans lequel :
une extrémité de l'élément d'accouplement (13) est pourvue d'une première bride (15),
la première bride (15) est fixée sur le support d'étage à vitesse élevée (12) au moyen de la pluralité de boulons (18),
la deuxième bride (16) est prévue à l'autre extrémité de l'élément d'accouplement (13), et
la deuxième bride (16) est d'un diamètre plus petit que la première bride (15).

3. Train d'engrenages multiplicateur planétaire (40) comportant :
un engrenage planétaire d'étage à faible vitesse ; et
un engrenage planétaire d'étage à vitesse élevée,
un arbre d'entrée (9) étant relié à une couronne d'étage à faible vitesse (1) de l'engrenage planétaire d'étage à faible vitesse,
la position d'un arbre d'un planétaire d'étage à faible vitesse (2) de l'engrenage planétaire d'étage à faible vitesse étant fixe,
un arbre (3a) d'un pignon solaire d'étage à faible vitesse (3) de l'engrenage planétaire d'étage à faible vitesse étant relié à un support d'étage à vitesse élevée (12) de l'engrenage planétaire d'étage à vitesse élevée, et
un arbre de sortie (10) étant relié au pignon solaire d'étage à vitesse élevée (6) de l'engrenage planétaire d'étage à vitesse élevée,
**caractérisé en ce que**
une bride (42) qui est prévue à une extrémité de l'arbre (3a) du pignon solaire d'étage à faible vitesse (3) est reliée au support d'étage à vitesse élevée (12) par l'intermédiaire d'un élément d'accouplement (41) qui est un élément flexible en forme de disque circulaire ayant approximativement le même diamètre que la bride (42), une partie de l'élément d'accouplement (41) est fixée sur le support d'étape à vitesse élevée (12) au moyen d'un boulon (18) de telle sorte qu'une face d'extrémité de l'élément d'accouplement (41) est amenée en contact avec une surface du support d'étage à vitesse élevée (12), et
une autre partie de l'élément d'accouplement (41) est fixée sur la bride (42) au moyen d'un autre boulon (18) de telle sorte que l'autre face d'extrémité de l'élément d'accouplement (41) est amenée en contact avec une face d'extrémité de la bride (42).

4. Eolienne comportant un train d'engrenages multiplicateur à train planétaire selon la revendication 1 ou 3.
